(19) Europäisches Patentamt
European Patent Office
Office européen des brevets

(11) **EP 1 425 104 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: **02772181.0**

(22) Anmeldetag: **21.08.2002**

(51) Int Cl.:
*B02C 19/18* (2006.01)   *A23L 3/32* (2006.01)
*A23L 1/025* (2006.01)   *C13B 10/08* (2011.01)
*A23L 1/221* (2006.01)   *A23L 1/318* (2006.01)

(86) Internationale Anmeldenummer:
**PCT/EP2002/009328**

(87) Internationale Veröffentlichungsnummer:
**WO 2003/022444 (20.03.2003 Gazette 2003/12)**

(54) **VERFAHREN UND REAKTOR ZUM NICHTTHERMISCHEN AUFSCHLUSS UND PASTEURISIEREN VON ORGANISCHEM PROZESSGUT DURCH ELEKTROPORATION**

METHOD AND REACTOR FOR THE NON-THERMAL DECOMPOSITION AND PASTEURISATION OF ORGANIC PROCESS MATERIALS BY ELECTROPORATION

PROCEDE ET REACTEUR POUR LA DESAGREGATION ET LA PASTEURISATION FROIDES PAR ELECTROPORATION DE PRODUITS DE PROCESSUS ORGANIQUES

(84) Benannte Vertragsstaaten:
**AT BE BG CH CY CZ DE DK EE ES FI FR GB GR IE IT LI LU MC NL PT SE SK TR**

(30) Priorität: **10.09.2001 DE 10144486**

(43) Veröffentlichungstag der Anmeldung:
**09.06.2004 Patentblatt 2004/24**

(73) Patentinhaber:
• **Karlsruher Institut für Technologie**
  **76131 Karlsruhe (DE)**
• **Südzucker Aktiengesellschaft Mannheim/ Ochsenfurt**
  **68165 Mannheim (DE)**

(72) Erfinder: **SCHULTHEISS, Christoph**
**76327 Pfinztal (DE)**

(74) Vertreter: **Schrell, Andreas**
**Gleiss Grosse Schrell & Partner**
**Patentanwälte Rechtsanwälte**
**Leitzstrasse 45**
**70469 Stuttgart (DE)**

(56) Entgegenhaltungen:
EP-A- 1 243 339     DE-A- 19 534 232
DE-A- 19 859 459    US-A- 3 265 605
US-A- 5 098 843     US-A- 6 117 660
US-B1- 6 403 348

**Beschreibung**

Die Erfindung betrifft ein Verfahren zum Aufschluss biologischer Zellen im industriellen Maßstab mit gepulsten elektrischen Feldern und einen Reaktor in einer Prozessstrasse zur Durchführung des Verfahrens.

Gepulste elektrische Felder mit Feldstärken im Bereich von 1-100 kV/cm führen zu irreversiblen Porenöffnungen in der Membran biologischer Zellen. Dieser mit Elektroporation bezeichnete Effekt wird zur effektiven Gewinnung der Inhaltsstoffe pflanzlicher Zellen und zur Abtötung von Mikroorganismen, Pasteurisieren, verwendet.

Andere Verfahren zur Freisetzung des Zytoplasmas sind thermische Behandlung oder Abpressung. Bei etwa 72 Grad Celsius denaturieren die Zellmembranen pflanzliche Zellen, und der Zellinhalt fließt aus. Bei der Abpressung führt ein äußerer Druck zum mechanischen Zerreißen der Zellwände und der Freigabe Zellinhalts. Beide klassischen Verfahren haben gravierende Nachteile: die thermische Behandlung ist energieintensiv und kann wertvolle, temperatursensitive Inhaltsstoffe schädigen. Die mechanische Abpressung ist, von der Anlagentechnik her gesehen, aufwendig und der Grad des Aufschlusses ist meist deutlich niedriger als beim thermischen Aufschluß. Die Kombination beider Verfahren besteht aus dem Kaltpressen und nachträglichen Auslösen der Inhaltsstoffe durch Lösungsmittel.

Das Verfahren der Elektroporation ist seit den sechziger Jahren des vergangenen Jahrhunderts bekannt, und seither wird das Phänomen der Permeabilisierung bzw. der Poration von Zellmembranen wissenschaftlich untersucht. Die DE 198 59 459 A1, US 6,403,348 B1 und die US 6,117,660 A beschreiben Vorrichtungen und Verfahren, bei denen durch Elektroporation Zellen nicht aufgeschlossen werden, sondern nur kurzzeitig eine poröse Membran aufweisen. In der DB 12 37 541 wird die Elektroporation für gängige Landwirtschaftsprodukte wie die Erschließung der Stärke bei Kartoffeln beschrieben. Die US 3 265 605 A beschreibt Vorrichtungen und Verfahren zur Änderung der Ladung von pflanzlichem oder tierischem Material in dispergierten Lösungen mittels Elektroporation. In der WO 99/6463 wird ein weiteres Verfahren zur Elektroporation beschrieben. Es werden die Vorteile dargelegt, mit diesem Verfahren Zuckerrüben zu prozessieren, bevor sie anschließend thermisch oder mechanisch weiter prozessiert werden. Dabei spiegelt die thermische Behandlung den Stand der Technik wider. Das mechanische Verfahren ist in der DE 197 36 080 A1 ebenfalls beschrieben.

Im Bereich der Elektroporation ist noch kein Verfahren und auch keine Anlage bzw. ein Reaktor bekannt, mit dem im industriellen Maßstab prozessiert werden könnte. Womit die Aufgabe formuliert ist, die der Erfindung zu Grunde liegt, nämlich ein Verfahren zur Elektroporation zellulärer biologischer Substanzen und einen Reaktor in einer Prozessstrasse zur Durchführung des Verfahrens bereit zu stellen.

Anstelle der Fruchtdrehung durch Strörnungsturbulenz oder Zwangsverwirbelung des Prozessgutstromes haben hier die elektrischen Felder im Reaktor über seine Länge unterschiedliche Richtung. Es ist z. B. Stand der Technik, die Frucht in einem dielektrischen Rohr zu transportieren an im Winkel versetzten Elektrodenpaaren angebracht sind, die jeweils in der benachbarten Querschnittsebenen übereinander liegen. Damit werden bei den vorbeigeförderten Rüben die Winkel in einer Ebene variiert und es werden die Zellen, die in dieser Ebene orientiert sind, erfaßt. Die mit ihrer langen Achse, übereinkommend der z-Achse, senkrecht zu dieser Ebene orientierten Zellen werden aber nicht aufgeschlossen.

Die Erfindung löst die Aufgabe, biologische Zellen mittels gepulster Elektroporation so zu modifizieren, daß im industriellen Maßstab prozessiert werden kann. D. h. große, industriell zu verarbeitende Mengen werden bei minimalem Energieverbrauch in einem dazu konzipierten, mit dem Verfahren betriebenen Reaktor prozessiert.

Bei dem Verfahren zum kontinuierlichen Aufschluß und zur Pasteurisieren solcher großen Mengen von biologischen Zellen in Pflanzen, Wurzeln, Knollen, Früchten und tierischen Zellen, dem organischen Prozessgut, wird dasselbe mit einer Transport-/Prozeßflüssigkeit durch einen Reaktor geströmt und dort zur Elektroporation gepulster elektrischer Felder ausgesetzt ist.

Die einzelnen Schritte sind:

Zwischen geerdeten und mit Hochspannung beaufschlagbaren, in der dielektrischen Reaktorwand eingelassenen Elektrodengruppen aus jeweils mindestens einer Elektrode im lichten Bereich des Reaktors werden pulsartig elektrische Felder E vielfältiger Richtung der Stärke erzeugt, dass jede Zelle beim Durchgang durch den Reaktor mit hoher Wahrscheinlichkeit mindestens einmal eine elektrische Feldstärke E derart erfährt, dass auch entlang ihrer längsten Achse mindestens einmal die Schwellenpotentialdifferenz

$$z E = 10 \text{ V}$$

für die Elektroporation erreicht wird. Dadurch werden die biologischen Zellen des Prozessguts, die längliche, beispielsweise ovale Gestalt in der Größenordnung von typisch 10-100 $\mu$m haben, wiederholt einer Potentialdifferenz von mindestens 10 V ausgesetzt.

Die mit Hochspannung beaufschlagbaren Elektroden werden zu Gruppen aus mindestens einer Elektrode zusammengefasst, und die Elektroden einer solchen Gruppe gleichzeitig an Hochspannung gelegt, bzw. mit dem Hochspannungspuls beaufschlagt, jedoch liegt stets nur eine Gruppe an Hochspannung.

Die Elektrodengruppen werden nacheinander wie bei einem Lauffeuer mit einer zeitlichen Streuung von mindestens bis mehrfach der Pulslänge mit Hochspannung beaufschlagt, auf jeden Fall so, dass das Feld sicher nur immer von einer Elektrodengruppe ausgeht. Dabei kann die Laufrichtung der Hochspannungsbeaufschlagung in Richtung der Strömung des Prozessguts sein oder entgegen dieser oder aber die Elektrodengruppen werden statistisch beaufschlagt, so dass im Reaktor ab dem Eingang bis zum Ausgang im Rhythmus der Hochspannungsbeaufschlagung der Gruppen aufgrund der Elektrodenanordnung ständig Richtungsänderungen der elektrischen Feldstärke E auftreten. Wesentlich ist, dass immer nur eine Elektrodengruppe mit Hochspannung beaufschlagt ist, damit werden gegenseitige Feldverdrängungen und damit Bereich mit Feldlinienverläufen senkrecht zur Durchströmungsachse, wie sie bei gleichzeitiger Feuerung zweier oder mehrerer Elektrodengruppen auftreten würden, vermieden. Von der Länge der elektrischen Einwirkung her gesehen, ist die Lauffeuerrichtung in Strömungsrichtung des Prozessguts eine bevorzugte, weil dann das durchströmende Prozessgut aufgrund der Mitbewegung zeitlich länger der elektrischen Einwirkung ausgesetzt ist.

Experimentelle Parameteruntersuchungen, sowie amerikanische Literaturquellen (K. H. Schoenbach et al. "Bacterial Decontamination of Liquids with Pulsed Electric Fields", IEEE Transactions on Dielectrics, Vol. 7, Nr. 6, p. 637 - 645, Oct. 2000) legen nahe, die Dauer des jeweiligen Hochspannungsimpulses im Bereich von 1 bis 3 $\mu$sec bei der Schwellenpotentialdifferenz von 10 V zu halten. Das ist für den Aufschluss des Prozessguts energetisch günstig (Anspruch 2). Dabei ist es vorteilhaft, wenn der Spannungsanstieg so schnell wie möglich, höchstens aber100 $\mu$sec dauert.

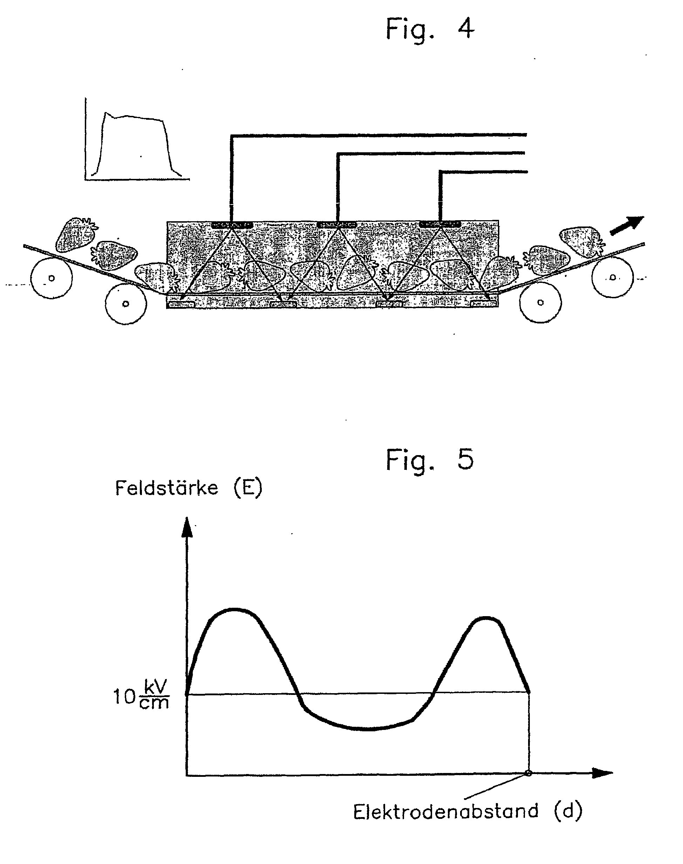

Die geerdeten Elektroden sind keiner mit Hochspannung beaufschlagbaren Elektrode oder einer Gruppe daraus eindeutig zugeordnet. Vielmehr korrespondiert eine Hochspannungselektrode/-gruppe mit den räumlich am nächsten liegenden, geerdeten Elektroden durch starke Feldausbildung bei Hochspannungsbeaufschlagung stark und mit den weiter wegliegenden entsprechend schwächer. Das macht den Umspringeffekt bzw. eine räumliche Fluktuation der elektrischen Felder aus. Die grundsätzlich auftretende Feldüberhöhung an den geerdeten Elektroden und der gerade auf Hochspannungspotential liegenden Elektrodengruppe im Vergleich zu der im mittleren Bereich auf der jeweiligen Strecke dazwischen läßt die Elektroporation eben auch noch bei weiter entfernt liegenden geerdeten Elektroden zu (siehe hierzu auch die unten stehenden Erläuterungen zu Figur 5, Feldstärkeverlauf).

Neben dem Effekt der Feldübererhöhung an weiter entfernt liegenden geerdeten Elektroden in der Nähe derselben wird auch noch die elektrische Feldstärke um einem Faktor 10 angehoben. Damit wird abgesichert, dass im Bereich weiter entfernter, geerdeten Elektroden das Zellgut zuverlässig elektroporiert wird.

Im Bereich der benachbarten Elektroden erzeugt man Schwellenpotentialdifferenzen von 100 V und mehr. Wegen der "Überpotentiale", hat sich gezeigt, dass die Pulszeit weniger als 1 $\mu$s betragen darf. Ein Vergleich der Aufschlussqualität zwischen der Schellenpotentialdifferenz 10 und 100 V ergibt bei gleicher spezifischer Energie einen Vorteil bei der letzteren (Anspruch 2). Der elektrische Energiespeicher der jeweiligen Elektrodengruppe soll schnell über den zugehörigen Schalter entladen. Der jeweilige Entladekreis ist deshalb so dimensioniert, dass der Spannungsanstieg bis zum Maximum von höchstens 1 MV in höchsten 100nsec erfolgt (Anspruch 3).

Der Reaktor zum Aufschließen und Pasteurisieren also zur optimalen Durchführung des Verfahrens der Elektroporation ist folgendermaßen aufgebaut (nebengeordneter Anspruch 4):

Der Reaktor ist tunnelförmig und hat einen polygonalen, mindestens jedoch viereckigen oder einen runden Querschnitt. Das Material der Wand ist dielektrisch und chemisch inert gegenüber der Prozessflüssigkeit und dem darin mitgeführten Prozessgut. In einem ersten Längsbereich der Reaktorwand sind über die Länge des Reaktors geerdete Elektroden eingelassen, die mit ihrer/m Stirn/Kopf in den lichten Raum des Reaktors exponiert sind.

In einem zweiten Längsbereich der Reaktorwand sind über die Länge des Reaktors mit Hochspannung beaufschlagbare Elektroden eingelassen sind, die mit ihrer/m Stirn/Kopf in den lichten Raum des Reaktors exponiert sind. Sie sind allgemein in Gruppen aus mindestens einer solchen Hochspannungselektrode unterteilt. Die Elektroden einer Gruppe liegen an ein und derselben Hochspannungsquelle. Jede Gruppe an Hochspannungselektroden hat ihre eigene Hochspannungsquelle.

Alle mit Hochspannung beaufschlagbaren Elektrodengruppen sind so angeordnet, daß der Abstand dieser Gruppen untereinander in etwa der lichten Weite d des Reaktors entspricht.

Der Längsbereich mit den mit Hochspannung beaufschlagbaren Elektrodengruppen ist beidseitig von dem Längsbereich mit geerdeten Elektroden durch je einen elektrodenlosen Längsbereich getrennt. Dieser hat über die Länge des Reaktors jeweils mindestens eine Breite derart, dass sich während der Prozessierung zwischen einer geerdeten Elektrode und der gerade mit Hochspannung beaufschlagten Elektrodengruppe die Feldstärke von 10 kV/cm einstellt und aufrecht erhält, d.h. es kann kein elektrischer Durchschlag auftreten.

Die Lage des Längsbereiches mit geerdeten Elektroden ist zu der Lage des Längsbereiches mit Hochspannung beaufschlagbaren Elektrodengruppen derart, dass jede geradlinige Verbindung zwischen einer geerdeten Elektrode und einer mit Hochspannung beaufschlagbaren Elektrode aus irgend einer Gruppe im lichten Bereich des Reaktors verläuft. Konstruktiv wird das Verhältnis der lichten Weite zur Reaktortiefe d eingehalten, dass der Abstand der hochliegenden Elektroden einer Gruppe zu der/n nächstliegenden geerdeten Elektrode/n derart ist, dass das Entstehen von Streufeldern mit < 10 kV/cm im Prozessgut unterbleibt.

In den Unteransprüchen 6 bis 9 sind vorteilhafte Maßnahmen beschrieben, die je nach Reaktorgröße Verfahrensschritte erleichtern:

Für einen in seinen Dimensionen großen Reaktor ist es zur gezielten Beschränkung der Feldliniendichte nützlich, statt jeweils einer einzelnen mit Hochspannung beaufschlagbaren Elektrode Gruppen von jeweils gleichzeitig mit Hochspannung beaufschlagbaren Elektroden zu haben. Dabei ist durchweg vorgesehen, dass die mit Hochspannung beaufschlagbaren Elektroden in Gruppen aus mindestens einer Elektrode aufgeteilt sind und jede Gruppe über ein Hochspannungskabel und einem/r Schalter/Funkenstrecke mit ihrer/m eigenen Hochspannungsquelle/Marx-Generator verbunden ist (Anspruch 6).

Die an der Innenwand mit ihrer Stirn exponierten, mit der Transport-/Prozeßflüssigkeit unmittelbar in Kontakt stehenden Elektroden haben zur Felderzeugung im Reaktorinnern folgende Flächenaufteilung:

Die Summe der im Reaktor exponierten Oberflächen der mit Hochspannung beaufschlagbaren Elektroden ist etwa gleich der am nächsten benachbarten, geerdeten Elektroden und wird bei Einrechnung der übernächsten geerdeten Elektroden nicht wesentlich unterschritten (Anspruch 7). Dabei soll die Fläche der Elektroden so dimensioniert werden, dass das Aspektverhältnis der Elektrodenfläche F zum Abstand d zwischen der jeweiligen Hochspannungselektrode und den korrespondierenden geerdeten Elektroden den Wert

$$F : d = 1/2 \text{ cm}$$

Die Elektroden sind derart auf dem jeweiligen Längsbereich des Reaktors verteilt, dass es kein Elektrodenpaar aus einer geerdeten und einer mit Hochspannung beaufschlagbaren Elektrode gibt, deren gerade Verbindungslinie senkrecht zur Strömungsrichtung des Prozessguts bzw. senkrecht zur Transportachse im Reaktor steht Ansprüche 3 und 9. Damit kommt keine Elektrodengruppe bei der Projektion senkrecht zur Durchströmungsachse mit einer geerdeten Elektrode zur Deckung. Bei dieser Projektion liegen die geerdeten Elektroden gewissermaßen immer um eine Elektrodengruppe herum, jedoch so, dass zu entfernteren geerdeten Elektroden zwischen den nahe liegenden immer ein ausreichender elektrischer Durchgriff zur Feldausbildung besteht.

Hinsichtlich der Durchsatzzeit hat sich gezeigt, dass wenn die Elektroden derart auf dem jeweiligen Längsbereich verteilt sind, dass bei der Projektion des Längsbereichs mit den mit Hochspannung beaufschlagbaren Elektroden senkrecht zur Strömungsrichtung auf den Längsbereich mit geerdeten Elektroden sich die ersteren Elektroden jeweils auf einer geschlossenen, einfach gekrümmten Linie oder auf einem Liniensektor davon um eine geerdete Elektrode liegen (oder auch bei umgekehrter Projektion), sich diese Durchsatzzeit spürbar herabsetzen lässt.

Im Gegensatz zu den bereits obengenannten thermischen und mechanischen Verfahren zerstören gepulste, elektrische Felder mit Feldstärken im Bereich von 1-100 kV/cm Zellmembrane irreversibel. Die Elektroporation taugt zur effektiveren Gewinnung der Inhaltsstoffe des Zytoplasmas biologischer Zellen und zur Abtötung von Mikroorganismen. Dabei entstehen Poren in der Zellmembrane, wachsen und verschließen sich unter dem Einfluß thermischer Fluktuation und lokaler elektrischer Felder. Modellhaft wird angekommen, dass hydrophile, Wasser nicht durchlässige, für den Stoffaustausch geeignete Poren in einem zweistufigen Prozeß entstehen. Sie treten zunächst als Wasser nicht durchlässige, hydrophobe Poren in Erscheinung, deren Bildungsrate von der Temperatur und dem Membranpotential abhängt. Erreichte ihr Radius einen kritischen Wert, wandeln sie sich sofort in hydrophile Poren um. Letztere können unter dem Einfluss eines elektrischen Feldes wachsen. Überschreitet ihr Radius während der Pulsdauern einen zweiten kritischen Wert, so ist die Öffnung irreversibel. Die Zeitsskala, innerhalb der die Poren sich öffnen, liegt erfahrungsgemäß im Bereich einer Mikrosekunde. Nur über diese Zeitspanne muß das äußere elektrische Feld angelegt sein. Bei Anlegen von stark überhöhten elektrischen Feldstärken, ab 10 kV/cm, kann sich diese Zeitspanne verringern.

Jede Verlängerung der Pulsdauer über den Zeitpunkt hinaus, an dem die Zellmembranen zerstört sind, erhöht nur die unvermeidlichen elektrolytischen Verluste in der Suspension. Daraus folgt, daß zur Erzielung mikrosekundenlanger sehr hoher Feldstärken über große Abstände in jedem Fall Spannungspulse von vielen 100 kV Amplitude erforderlich sind und zur Erzielung eines hohen Durchsatzes eine möglichst hohe Wiederholfrequenz der Pulse eingestellt werden muß.

Für eine solche Anlage/Einrichtung muß die Standzeit der Impulsgeneratoren industriellen Standards entsprechen. Mit Marx-Generatoren sind solche Eigenschaften einstellbar. Pulstransformatoren lassen sich für solche kurzen zeitlichen Vorgänge nicht mehr mit vertretbarem Aufwand bauen und sind daher als Baukomponente unwirtschaftlich.

Im Marx-Generator werden zunächst Hochspannungskondensatoren parallel auf eine Ladespannung von z. B. 50 kV aufgeladen und dann in Serie geschaltet, um die Einzelspannungen zu addieren. Für beispielsweise zehn Kondensatoren ergibt sich beim Durchschalten der Funkenstrecken einfach eine Amplitude von 500 kV. Die weiteren Parameter werden mit Hilfe der Zeitkonstanten τ des durchgeschalteten elektrischen Kreises mit:

$$\tau = RC < 1 \ \mu s$$

bestimmt. -R ist im wesentlichen der Widerstand der Suspension von Wasser und der biologischen Zellen und C die Kapazitäten der seriell geschalteten Kondensatoren eines Marx-Generators. Induktive R-L-Glieder sind bei dieser Anwendung vergleichsweise klein und damit hier vernachlässigbar.

Für das verfahrenstechnisch brauchbare Arbeiten des Reaktors ist der Einsatz von Marx Generatoren als Spannungsquelle für die Elektroporation entscheidend. Zuckerrüben als Beispiel werden mit einer von außen angelegten Feldstärke von 10 kV/cm effektiv elektroporiert, wenn der durchgeschaltete Marx-Generator 500 kV Pulse liefert und der der Reaktor eine lichte Weite von 50 cm hat. Obwohl die Feldstärke mit 10 kV/cm sehr hoch ist, wird erfahrungsgemäß nur ein Teil der Rübenzellen aufgeschlossen. Für den anderen Teil ist die von außen angelegte Feldstärke noch nicht ausreichend hoch. Der Grund ist: biologische Zellen sind in den meisten Fällen länglich. Zur Modellbeschreibung dient eine an die Zellenform angelehnte lange z- und eine kurze r-Achse. Liegt die Zelle mit ihrer Länge z beispielsweise parallel zur örtlichen Feldrichtung, baut sich entlang eine Potentialdifferenz von $U = z E$ auf, die die Elektroporation zulässt und bewirken kann. Anders kann es sich an der kurze r-Achse von Zellen verhalten, an der das kleinere Potential $U = 2r E$ anliegt, falls r in etwa der Radius der länglichen Zelle ist. Eine ovale Zelle mit beispielsweise den Ausmaßen $z = 100 \mu m$ und $2r = 10 \mu m$ soll elektroporiert werden. Bei einer Feldstärke von 1 kV/cm und einer Pulsdauer von Mikrosekunden wird die Porationsschwelle von hier zellsubstanzspezifisch 10 V nicht erreicht, weil

$$2rE = 10 \ \mu m \ x \ 1kV/cm = 1V$$

ist. Eine mit der kleinen Achse zum Feld orientierten Zelle überlebt. Wären Feld und Achse gleichgerichtet gewesen, wäre es zur irreversiblen Membranöffnung gekommen.

Für Pulse im Mikrosekundenbereich liegt die Schwelle für irreversible Elektroporation bei der Potentialdifferenz von ca. 10 V. Diese Schwelle, aber auch Abschirmeffekte durch anisotropen Stromfluß, führen dazu, daß zur sicheren Elektroporation mit überhöht angelegter Feldstärke operiert werden, Schwellenpotentialdifferenz im Bereich 100 V, und zusätzlich die Frucht in verschiedene Positionen gedreht werden muß, um an den Zellen den Effekt der Elektroporation hochwahrscheinlich auszulösen.

Die Erfindung wird im folgenden anhand der Zeichnung näher erläutert. Die Zeichnung besteht aus den Figuren 1 bis 5 und skizziert als einfachstes Beispiel den Reaktor mit viereckigem Querschnitt.

Die Figuren zeigen im einzelnen:

Figur 1 den Reaktor in Draufsicht,
Figur 2 den Reaktor in Seitenansicht,
Figur 3 den Reaktor durch eine Stirn,
Figur 4 den schematischen Aufbau des Reaktors,
Figur 5 qualitativer Feldstärkeverlauf.

Am elektrischen Feld sich orientierende Messungen bei Rüben haben gezeigt, daß durch Erfassung aller Zellen die spezifische Energie, bezogen auf die Rübe, von 8 kJ/kg auf ca. 2kJ/kg gesenkt wird. Neben der unvollständigen Elektroporation in einer Rohranordnung hat sich auch das Fördern ganzer Früchte im Rohr als nachteilig erwiesen, da es zu Verkantungen und Verkeilungen und damit einem Prozessgutstau kommt, der manuell beseitigt werden muß. Daher wird in dieser Erfindung einer Förderung der Vorzug gegeben, bei der auf die Früchte eine kontinuierliche Transportkraft ausübt wird, wie das z. B. beim Kettenförderer geschieht.

Der Durchsatz eines Kettenförderers wird bestimmt durch die Fördergeschwindigkeit, die Breite, in Höhe und den Grad der Befüllung. In Abhängigkeit des biologischen Zellenmaterials beträgt die Höhe des Förderers ca. 50 cm; die Fördergeschwindigkeit wird so eingestellt, daß während der Verweilzeit im Reaktor die durch Hochspannungspulse herangetragene spezifische Energie den gewünschten Schwellenwert erreicht hat. Die Breite des Reaktors ist keinen Einschränkungen unterworfen.

Der Reaktor hat hier einen rechteckigen Querschnitt und ist aus dielektrischem, für den Prozeß in allen Belangen hinreichend zähem Material gefertigt. Die beweglichen Teile, wie Bänder mit Querrippen etc. sind ebenfalls aus dielektrischem Material. Die Höhe des Reaktors ist hier ca. 50 cm, die Länge L ist beispielsweise 200 cm und die Breite 100 cm. An der unteren Seite sind die geerdeten Elektroden eingebaut, die obere Seite hat die hochspannungsführenden Elektroden, wobei jede Gruppe gleichzeitig mit Hochspannung aus einem zugehörigen Marxgenerator beaufschlagbarer Elektroden hier nur aus einer einzigen Elektrode besteht. Der Abstand zweier geerdeter Elektroden ist 50 cm ebenso der der mit Hochspannung beaufschlagbaren.

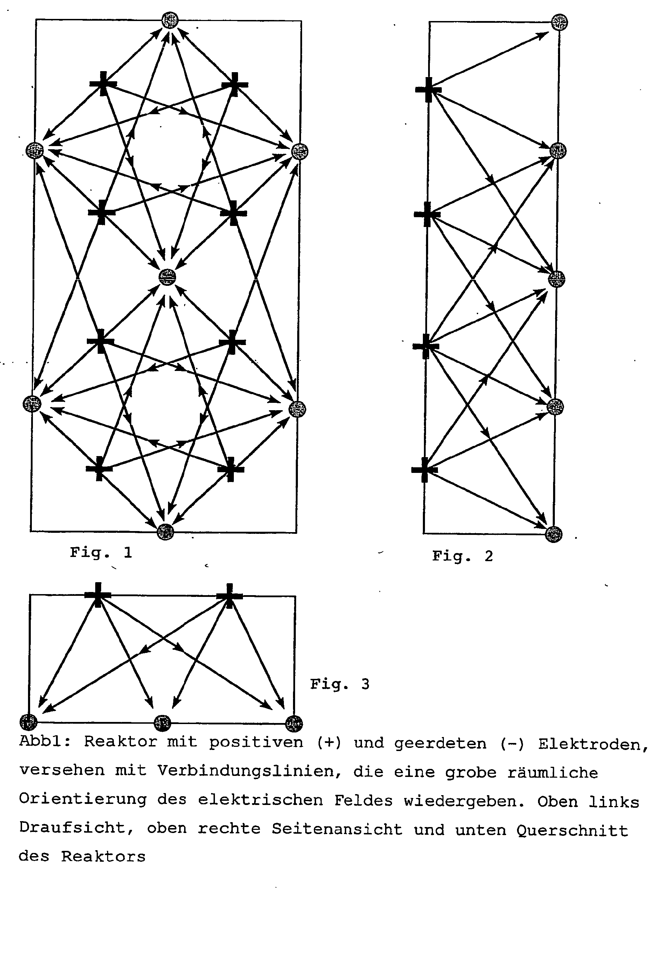

In Figur 1 ist das Elektrodenschema am Reaktor dargestellt. Alle Punkte stellen die geerdeten Elektroden dar. Die hochspannungsführenden Elektroden sind als Kreuze dargestellt. Sie sind insgesamt gegenüber den geerdeten Elektroden so versetzt und rotiert, daß sie in dieser Draufsicht zentriert liegen. Zumindest die mittlere Reihe von geerdeten Elektroden werden durch das durch den Reaktor durchlaufende dielektrische Band des Kettenförderers, der hier nicht dargestellt ist, verdeckte. Das Band ist daher in diesem Bereich gelocht, so daß durch diese Durchbrüche darin eine von der relativen Dielektrizitätskonstanten des Kettenförderermaterials ungestörte Feldausbildung zwischen den beiden Elektrodenarten, geerdete und mit Hochspannung beaufschlagbare, stattfindet.

Hier beispielsweise sind 8 Marx Generatoren vorgesehen, d. h. die mit Hochspannung beaufschlagbaren Elektrodengruppen bestehen jeweils aus einer Elektrode. Die in den Figur 1 bis 3 zwischen den beiden Elektrodenarten eingezeichneten Pfeile deuten die Richtung des lokal überwiegend wirksamen elektrischen Feldes an. Aus der Darstellung der Draufsicht (Figur 1), der Seitenansicht (Figur 2) und der Vorderansicht (Figur 3) ist zu sehen, daß der überwiegende Anteile des lichten Raums im Reaktor von in der Richtung stark divergierenden Verbindungslinien durchkreuzt ist. Damit erst ist sichergestellt ist, daß das durchlaufende Prozessgut, Rüben plus Transportflüssigkeit, hier Wasser, das Rübenmaterial an jeder Stelle des Reaktors von elektrischen Feldlinien aus unterschiedlichen Richtungen durchsetzt wird.

Bei der Dimensionierung der Elektrodenfläche ist darauf zu achten, daß der elektrolytische Widerstand, bedingt durch den Stromfluß durch das Wasserbad und durch die Fruchtmasse den Gesamtwiderstand entsprechend der Beziehung

$$\tau = RC < 1\ \mu s$$

nicht unterschreitet, das sonst die Pulslänge kleiner $1\mu s$ wird und für die Elektroporation, wie oben erläutert, nicht mehr genügend lang ist. Bei beispielhaft einem elektrolytischen Widerstand von etwa 1,5 m$\Omega$/cm und einen Elektrodenabstand von ca. 20 cm, sollen die scheibenförmigen Elektroden einen Durchmesser von ca. 30 mm nicht überschreiten; das ergibt ein Aspektverhältnis von Elektrodenfläche zu Abstand von ca. ½ cm. Bei grösseren Aspektverhältnissen verbessert sich zwar die Homogenität der Feldstärke, jedoch nehmen auch die elektrolytischen Verluste unverhältnismassig zu.

Es ist auch darauf zu achten, daß die Elektrodenfläche nicht zu klein gewählt wird. In einem solchen Fall verlagert sich der Bereich hoher Feldstärken aus dem Raum zwischen dem Elektroden in die direkte Umgebung der Elektroden, was zu vermeiden ist (siehe Figur 5).

Bei der Dimensionierung der Elektrodenfläche für einen Reaktor, wie er in den Figuren 1 und 2 dargestellt, ist zu beachten, daß die hochspannungsführenden Elektroden mehrere geerdete Elektroden in ihrer unmittelbaren Nachbarschaft haben. Daher sollen die am nächsten benachbarten geerdeten Elektroden zusammen die gleiche Fläche wie die hochspannungsführende Elektrode haben.

Figur 5 zeigt einerseits den Verlauf der elektrischen Feldstärke zwischen einer gerade mit Hochspannung beaufschlagten und einer beliebigen der geerdeten Elektroden. Es ergibt sich eine Feldstärkeüberhöhung in der Nähe der Elektroden und ein Absenken der Feldstärke im Raum dazwischen. Die Feldstärkeverzerrung ist eine Funktion der Elektrodenflächen. Für sehr kleine Elektrodenflächen geht die Feldstärke in Raum auf fast Null herunter. Die gleiche Situation ergibt sich auch, wenn eine kleine Elektrode einer wandförmigen Elektrode gegenübersteht, wenn z. B. das Reaktorgehäuse aus Metall anstatt aus dielektrischem Material bestünde. Eine hohe Feldliniendichte würde sich nur in der unmittelbaren Umgebung der kleinen Elektrode einstellen.

Figur 5 zeigt qualitativ den Verlauf der elektrischen Feldstärke zwischen einer gerade mit Hochspannung beaufschlagten und einer beliebigen der geerdeten Elektroden. Es ergibt sich eine Feldstärkeüberhöhung in der Nähe der Elektroden und ein Absenken der Feldstärke im Raum dazwischen. Die Feldstärkeverzerrung ist eine Funktion der Elektrodenflächen. Für sehr kleine Elektrodenflächen geht die Feldstärke in Raum auf fast Null herunter. Die gleiche Situation ergibt sich auch, wenn eine kleine Elektrode einer wandförmigen Elektrode gegenübersteht, wenn z. B. das Reaktorgehäuse aus Metall anstatt aus dielektrischem Material bestünde. Eine hohe Feldliniendichte würde sich nur in der unmittelbaren Umgebung der kleinen Elektrode einstellen. Figur 5 zeigt zusätzlich noch die Feldstärkeverteilung senkrecht zur Elektrodenanordung also einer Richtung, die in etwa der Flussrichtung des Reaktors entspricht. Die Verteilung illustriert die Expansion der Feldstärke in das Reaktorvolumen und gibt Auskunft über die Feldverhältnisse zu einem naheliegenden Elektrodenpaar.

**Patentansprüche**

1. Verfahren zum kontinuierlichen nichtthermischen Aufschluß und Pasteurisieren industrieller Mengen organischen Prozeßguts durch Elektroporation, wobei das Prozeßgut in und mit einer Transport-/Prozeßflüssigkeit durch einen Reaktor geströmt und darin der Wirkung gepulster elektrischer Felder ausgesetzt wird, **dadurch gekennzeichnet, daß** zwischen in einem Längsbereich des Reaktors verteilten geerdeten Elektroden und in einem gegenüberliegenden Längsbereich des Reaktors verteilten, mit Hochspannung beaufschlagbaren Elektrodengruppen aus jeweils mindestens einer Elektrode pulsartig elektrische Felder stets nur zwischen einer Elektrodengruppe und den geerdeten Elektroden erzeugt werden, indem eine an die jeweilige Elektrodengruppe über einen zugehörigen Schalter angeschlossene elektrische Energiequelle ohne zeitliche Überlappung mit den andern Elektrodengruppen entladen wird, wobei die Feldachsen von einer Elektrodengruppe zu den geerdeten Elektroden niemals senkrecht auf der Durchgangsachse durch den Reaktor stehen, und die Aufladung der elektrischen Energiequellen zwischen zwei jeweiligen unmittelbar aufeinanderfolgenden Entladungen so hoch eingestellt wird, dass im Bereich zwischen einer Elektrodengruppe und mindestens den nächst gelegenen geerdeten Elektroden bei der Entladung eine elektrische Feldstärke E zustande kommt, dass entlang der Längsachse der Zellen, der Hauptachse z, des gerade in diesem Feldbereich befindlichen Prozessguts während der Dauer von höchstens 1 $\mu s$ die Schwellenpotentialdifferenz

$$\Delta\varphi s = 10\ V$$

zur irreversiblen Öffnung der Zellwand mindestens überschritten wird.

**2.** Verfahren nach Anspruch 1, **dadurch gekennzeichnet, dass** die Aufladung der elektrischen Energiequellen zwischen zwei jeweiligen unmittelbar aufeinanderfolgenden Entladungen so hoch eingestellt wird, dass im Bereich zwischen einer Elektrodengruppe und mindestens den nächst gelegenen geerdeten Elektroden bei der Entladung eine elektrische Feldstärke E zustand kommt, dass entlang der Längsachse der Zellen, der Hauptachse z, des gerade in diesem Feldbereich befindlichen Prozessguts während der Dauer von höchstens 1 $\mu$s die Potentialdifferenz $\phi$

$$\Delta\varphi\ >=\ 100\ V$$

Zustande kommt.

**3.** Verfahren nach Anspruch 2, **dadurch gekennzeichnet, dass** die Dimensionierung eines aus einem Marx-Generator und der daran über eine Funkenstrecke angeschlossenen Elektrodengruppe derart eingehalten wird, dass der Spannungsanstieg bis zum Spannungsmaximum von höchsten 1 MV höchstens 100 nsec dauert.

**4.** Reaktor zum kontinuierlichen, nicht-thermischen Aufschluß und zum Pasteurisieren industrieller Mengen organischen Prozessguts durch Elektroporation,
wobei das Prozessguts aus biologischen Zellen in Pflanzen, Wurzeln, Knollen, Früchten und tierischem Material besteht, der Reaktor tunnelförmiger Bestandteil einer Prozessgut-Transportstraße ist, die im Reaktorbereich durch die Transport-/Prozessgutflüssigkeit geflutet ist und durchströmt wird, und das Prozessguts darin der Wirkung gepulster elektrischer Felder ausgesetzt ist,
**dadurch gekennzeichnet, dass**
der Reaktor tunnelförmig ist und runden oder polygonalen und dann mindestens viereckigen Querschnitt hat und aus dielektrischen Material besteht, über die Länge des Reaktors in einem ersten Längsbereich der Reaktorwand geerdete Elektroden eingelassen sind, die mit ihrer/m Stirn/Kopf in den lichten Raum des Reaktors exponiert sind, über die Länge des Reaktors in einem zweiten Längsbereich der Reaktorwand mit Hochspannung beaufschlagbare Elektroden eingelassen sind, die mit ihrer/m Stirn/Kopf in den lichten Raum des Reaktors exponiert sind,

alle mit Hochspannung beaufschlagbaren Elektroden zu Gruppen aus mindestens einer Elektrode zusammengefasst sind und die Gruppen so angeordnet sind, daß der Abstand dieser Gruppen untereinander in etwa der lichten Weite d entspricht, der Längsbereich mit den mit Hochspannung beaufschlagbaren Elektrodengruppen beidseitig von dem Längsbereich mit geerdeten Elektroden durch"je einen elektrodenlosen Längsbereich getrennt sind, der über die Länge des Reaktors jeweils mindestens eine Breite derart hat, dass während der Prozessierung zwischen zwei unterschiedlichen Elektrodengruppen kein elektrischer Durchschlag auftreten kann, sich aber die für die Elektroporation geforderte Feldstärke von $\geq$ 10 kV/cm aufbauen und halten kann,
die Lage des Längsbereiches mit geerdeten Elektroden zu der Lage des Längsbereiches mit Hochspannung beaufschlagbaren Elektrodengruppen derart ist, dass jede geradlinige Verbindung zwischen einer geerdeten Elektrode und einer Elektrodengruppe im lichten Bereich des Reaktors verläuft und niemals senkrecht zu der Durchströmungsachse durch den Reaktor steht.

**5.** Reaktor nach Anspruch 4, **dadurch gekennzeichnet, dass** das die mit Hochspannung beaufschlagbaren Elektroden in Gruppen aus mindestens einer Elektrode aufgeteilt sind und jede Gruppe über ein Hochspannungskabel und einem/r Schalter/Funkenstrecke mit ihrer/m eigenen Hochspannungsquelle/Marx-Generator verbunden ist.

**6.** Reaktor nach Anspruch 5, **dadurch gekennzeichnet, dass** die Oberfläche jeder mit Hochspannung beaufschlagbaren Elektrodengruppe etwa gleich der Summe der am nächsten benachbarten exponierten Oberflächen geerdeter Elektroden ist.

**7.** Reaktor nach Anspruch 6, **dadurch gekennzeichnet, dass** das Aspektverhältnis von Elektrodenfläche F zu Abstand d zwischen der jeweiligen Hochspannungselektrode und den am nächsten benachbarten, geerdeten Elektroden den Wert:

$$F\ :\ d\ =\ 1/2\ cm$$

nicht und bei Einrechnung der übernächsten geerdeten Elektroden diesen Wert nicht wesentlich unterschreitet.

**8.** Reaktor nach Anspruch 7, **dadurch gekennzeichnet, dass** die Elektroden derart auf dem jeweiligen Längsbereich verteilt sind, dass es kein Elektrodenpaar aus einer geerdeten und einer mit Hochspannung beaufschlagbaren Elektrode gibt, deren gerade Verbindungslinie senkrecht zur Strömungsrichtung des Prozessguts bzw. senkrecht zur Transportachse im Reaktor steht.

9. Reaktor nach Anspruch 8, **dadurch gekennzeichnet, dass** die mit den mit Hochspannung beaufschlagbaren Elektrodengruppen derart auf ihrem Längsbereich verteilt sind, dass bei der Projektion senkrecht zur Achse der Durchströmung durch den Reaktor auf den Längsbereich mit geerdeten Elektroden keine Elektrodengruppe mit einer geerdeten Elektrode zur Deckung kommt.

**Claims**

1. A method for the continuous non-thermal decomposition and pasteurization of industrial quantities of organic process material by electroporation, wherein the process material is carried through a reactor in, and with, a transport/processing liquid and is subjected therein to the effects of pulsed electric fields, **characterized in that** pulse-like electric fields that are generated between grounded electrodes which are distributed over a longitudinal area of the reactor and electrode groups consisting each of at least one electrode which can be energized by high voltage and are distributed over an opposite longitudinal area of the reactor are always generated only between an electrode group and the grounded electrodes by discharging an electric energy source which is connected to the respective electrode group by way of an associated switch without time-overlap with the other electrode groups, wherein the field axes from an electrode group to the grounded electrodes are never perpendicular to the flow axis through the reactor and charging of the electric energy sources between two respective immediately successive discharges is set to such a level that, in the area between an electrode group and at least the nearest grounded electrodes, an electric field strength E is generated during the discharge such that, along the longitudinal axis of the cells, that is the main axis z, of the process material which is momentarily present in this field area, the threshold potential difference

$$\Delta\varphi s = 10 \text{ V}$$

is at least exceeded for the duration of at most 1 $\mu$s for irreversibly opening the cell wall.

2. The method according to claim 1, wherein between two respective immediately successive discharges the electric energy sources are charged to such a level that, in the area between an electrode group and at least the nearest grounded electrodes, an electric field strength E is generated during the discharge such that, along the longitudinal axis of the cells, that is the main axis z, of the process material which is momentarily present in this field area, a potential difference $\phi$ of

$$\Delta\varphi \text{ >= } 100 \text{ V}$$

is generated for a period of no more than 1 $\mu$s.

3. The method according to claim 2, **characterized in that** the dimensioning of a Marx generator and the electrode group connected thereto via a spark gap is maintained such that the voltage increase to the voltage maximum of at most 1 MV takes no longer than 100 nsec.

4. A reactor for the continuous non-thermal decomposition and pasteurization of industrial amounts of organic process material by electroporation,
   wherein the process material consists of biological cells in plants, roots, tubers, fruits, and animal material,
   the reactor is a tunnel-shaped part of a process material transport path which, in the reactor area, is flooded and flown through by the transport/process liquid and the process material present therein is exposed to the effects of pulsed electric fields,
   **characterized in that**
   the reactor is tunnel-shaped and has a round or polygonal and, in the latter case, at least quadrangular cross-section and consists of a dielectric material,
   grounded electrodes are disposed in a first longitudinal area of the reactor wall over the length of the reactor, said electrodes having a front/head which are exposed to the open space of the reactor,
   electrodes which can be energized by high voltage are disposed in a second longitudinal area of the reactor wall over the length of the reactor, said electrodes having a front/head which are exposed to the open space of the reactor,
   all electrodes that can be energized by high voltage are combined in groups comprising at least one electrode, said groups being arranged such that the spacing of these groups among each other corresponds about to the inner open width d,
   the longitudinal area including the electrode groups that can be energized with high voltage is, on either side, separated from the longitudinal area including the grounded electrodes by a length area which does not include any electrodes and, over the length of the reactor, has at least such a width that, during processing, no electrical discharge can occur between two different electrode groups, but the field strength of $\geq$ 10 kV/cm required for the electroporation can be established and maintained,

the position of the longitudinal area including grounded electrodes relative to the position of the longitudinal area including electrode groups that can be energized by high voltage is such that each straight line connection between a grounded electrode and an electrode group extends in the open area of the reactor and is never perpendicular to the flow axis through the reactor.

5. The reactor according to claim 4, **characterized in that** the electrodes that can be energized by high voltage are arranged in groups of at least one electrode and each group is connected by way of a high voltage cable and a switch/spark gap to its own high voltage source/Marx generator.

6. The reactor according to claim 5, **characterized in that** the surface area of each electrode group that can be energized by high voltage equals about the sum of the nearest adjacent exposed surfaces of grounded electrodes.

7. The reactor according to claim 6, **characterized in that** the aspect ratio of the electrode surface F to the distance d between the respective high voltage electrode and the nearest adjacent grounded electrodes does not fall below the value

$$F : d = 1/2 \text{ cm}$$

and does not fall below that value essentially when the grounded electrodes after the next are taken into account.

8. The reactor according to claim 7, **characterized in that** the electrodes are distributed over the respective longitudinal area such that there is no electrode pair comprising a grounded electrode and an electrode that can be energized by high voltage and whose straight line connection is perpendicular to the flow direction of the process material and perpendicular to the transport path in the reactor.

9. The reactor according to claim 8, **characterized in that** the electrode groups that can be energized by high voltage are distributed over their longitudinal area such that, in a projection perpendicular to the axis of flow through the reactor onto the longitudinal area including grounded electrodes, no electrode group reaches congruent coverage with a grounded electrode.

**Revendications**

1. Procédé destiné à la fusion en continu non thermique et à la pasteurisation de quantités industrielles d'un produit de processus organique par électroporation, le produit de processus s'écoulant par un réacteur au sein ou à l'aide d'un fluide de transport / de processus et étant exposé à l'effet des champs électriques pulsés, **caractérisé en ce que**, entre des électrodes raccordées à la terre réparties dans un secteur longitudinal du réacteur et des groupes d'électrodes comprenant au moins à chaque fois une électrode, pouvant être alimentées en haute tension et répartis dans un secteur longitudinal opposé du réacteur, des champs électriques à impulsions sont toujours générés seulement entre un groupe d'électrodes et les électrodes raccordées à la terre, grâce au fait qu'une source d'énergie électrique raccordée par l'intermédiaire d'un commutateur alloué au groupe d'électrodes correspondant est déchargée sans chevauchement temporel avec les autres groupes d'électrodes, les axes des champs d'un groupe d'électrodes vers les électrodes raccordées à la terre n'étant jamais perpendiculaires à l'axe traversant le réacteur, et **en ce que** la charge des sources d'énergies électriques entre les deux décharges, survenant à chaque fois directement l'une après l'autre, est réglée à un niveau si élevé qu'une intensité de champ électrique E est établie dans le secteur entre un groupe d'électrodes et, au moins, les électrodes raccordées à la terre situées à proximité lors du déchargement, **en ce que**, le long de l'axe longitudinal des cellules, l'axe principal z, du produit de processus se trouvant justement dans ce secteur du champs la différence de potentiel seuil

$$\Delta\varphi s = 10 \text{ V}$$

est au moins dépassée pendant la durée d'au moins 1 $\mu$s, en vue d'une ouverture irréversible de la paroi cellulaire.

2. Procédé selon la revendication 1 **caractérisé en ce que** le chargement des sources d'énergie électriques entre deux décharges, survenant à chaque fois directement l'une après l'autre, est réglé à un niveau si élevé qu'une intensité de champ électrique E est établie dans le secteur entre un groupe d'électrodes et, au moins, les électrodes raccordées à la terre situées à proximité lors du déchargement, **en ce que**, le long de l'axe longitudinal des cellules, l'axe principal z, du produit de processus se trouvant justement dans ce secteur du champs la différence de potentiel $\phi$,

$$\Delta\varphi > = 100 \text{ V}$$

est atteinte pendant la durée d'au moins 1 μs.

3.  Procédé selon la revendication 2, **caractérisé en ce que** le dimensionnement d'un générateur Marx et le groupe d'électrodes qui y est raccordé via un éclateur, est respecté de sorte qu'une montée en tension jusqu'à son maximum de 1 MV au plus haut dure au maximum 100 nsec.

4.  Réacteur destiné à la fusion en continu non thermique et à la pasteurisation de quantités industrielles d'un produit de processus organique par électroporation,
    le produit de processus consistant en des cellules biologiques de plantes, racines, tubercules, fruits et de matière animale,
    le réacteur étant une composante en forme de tunnel d'un circuit de transport du produit de processus, qui est, dans le secteur du réacteur, immergé et traversé par le fluide de transport / produit du processus et dans lequel le produit du processus est exposé à l'effet des champs électriques pulsés,
    **caractérisé en ce que**
    le réacteur a la forme d'un tunnel et est doté d'une section arrondie ou polygonale puis au moins d'une section carrée et se compose d'un matériau diélectrique,
    les électrodes raccordées à la terre étant encastrées sur la longueur du réacteur dans un premier secteur longitudinal de la paroi du réacteur, lesquelles sont exposées avec leur front / tête au compartiment intérieur du réacteur,
    les électrodes pouvant être alimentées par une tension élevée étant encastrées sur la longueur du réacteur dans un second secteur longitudinal de la paroi du réacteur, lesquelles sont exposées avec leur front / tête au compartiment intérieur du réacteur,
    toutes les électrodes pouvant être alimentées par une tension élevée étant regroupées en groupes comprenant au moins une électrode et les groupes étant agencés de sorte que la distance les séparant les uns des autres corresponde à peu près à la distance intérieure d,
    le secteur longitudinal comprenant les groupes d'électrodes pouvant être alimentées par une tension élevée étant séparé de part et d'autre par le secteur longitudinal comprenant les électrodes raccordées à la terre par, à chaque fois, un secteur longitudinal sans électrode, lequel secteur présente, sur la longueur du réacteur à chaque fois, au moins une largeur de sorte que, durant le traitement entre deux groupes d'électrodes différents, aucune décharge électrique disruptive ne puisse se produire, mais que l'intensité de champ ≥10 kV/cm nécessaire à l'électroporation puisse se développer et tenir,
    la position du secteur longitudinal comprenant les électrodes raccordées à la terre par rapport à celle du secteur longitudinal des groupes d'électrodes pouvant être alimentées par une tension élevée étant telle que chaque liaison rectiligne entre une électrode raccordée à la terre et un groupe d'électrodes se fait dans le compartiment interne du réacteur et n'est jamais perpendiculaire à l'axe d'écoulement par le réacteur.

5.  Réacteur selon la revendication 4, **caractérisé en ce que** les électrodes pouvant être alimentées par une tension élevée sont divisées en des groupes comprenant au moins une électrode et **en ce que** chaque groupe est relié au moyen d'un câble haute tension et d'un commutateur / écarteur à sa propre source de haute tension / à son propre générateur Marx.

6.  Réacteur selon la revendication 5, **caractérisé en ce que** la surface de chaque groupe d'électrodes pouvant être alimentées par une tension élevée correspond à peu près à la somme des surfaces exposées adjacentes des électrodes raccordées à la terre.

7.  Réacteur selon la revendication 6, **caractérisé en que** le rapport d'aspect de la surface F des électrodes sur la distance d entre chaque électrode à haute tension et les électrodes raccordées à la terre adjacentes ne chute pas en dessous de la valeur :

$$F : d = \tfrac{1}{2} \text{ cm}$$

et ne chute pas fondamentalement en cas d'inclusion des électrodes suivantes raccordées à la terre.

8.  Réacteur selon la revendication 7, **caractérisé en que** les électrodes sont réparties sur chaque secteur longitudinal, de sorte qu'il n'existe aucune paire d'électrodes composée d'une électrode raccordée à la terre et d'une pouvant être alimentée par une tension élevée, dont la ligne de liaison linéaire est perpendiculaire à la direction du flux du produit de processus ou perpendiculaire à l'axe de transport dans le réacteur.

9.  Réacteur selon la revendication 8, **caractérisé en que** les groupes d'électrodes pouvant être alimentées par une tension élevée sont répartis sur leur secteur longitudinal de sorte qu'aucun groupe d'électrodes ne vienne couvrir une électrode raccordée à la terre en cas de projection perpendiculaire à l'axe d'écoulement à travers le réacteur sur le secteur longitudinal comprenant les électrodes raccordées à la terre.

Fig. 1

Fig. 2

Fig. 3

Abb1: Reaktor mit positiven (+) und geerdeten (-) Elektroden, versehen mit Verbindungslinien, die eine grobe räumliche Orientierung des elektrischen Feldes wiedergeben. Oben links Draufsicht, oben rechte Seitenansicht und unten Querschnitt des Reaktors

# Fig. 4

# Fig. 5

Feldstärke (E)

$10\frac{kV}{cm}$

Elektrodenabstand (d)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19859459 A1
- US 6403348 B1
- US 6117660 A
- US 3265605 A
- WO 996463 A
- DE 19736080 A1

**In der Beschreibung aufgeführte Nicht-Patentliteratur**

- **K. H. Schoenbach et al.** Bacterial Decontamination of Liquids with Pulsed Electric Fields. *IEEE Transactions on Dielectrics,* Oktober 2000, vol. 7 (6), 637-645